# FASCICULE DE BREVET EUROPEEN

(11) **EP 2 243 646 B1**
(45) Date de publication et mention de la délivrance du brevet: **29.05.2013**
(21) Numéro de dépôt: 10160419.7
(22) Date de dépôt: 20.04.2010
(51) Int. Cl.: B60H 1/00

(54) **Boîtier de traitement thermique pour le traitement thermique d'un flux d'air**
Gehäuse zur Wärmebehandlung für die Wärmebehandlung eines Luftstroms
Thermal treatment box for thermal treatment of an air flow

(30) Priorité: 20.04.2009 FR 0901905
(43) Date de publication de la demande: 27.10.2010
(73) Titulaire: Valeo Systèmes Thermiques, 78321 Le Mesnil Saint Denis (FR)
(72) Inventeur: Pierres, Philippe, 78990, Elancourt (FR); Vincent, Philippe, 28230, Epernon (FR)

(56) Documents cités:
- EP-A- 1 306 241
- EP-A- 1 319 541
- FR-A- 2 699 457
- US-A- 5 070 770
- US-A1- 2007 077 879

## Description

La présente invention concerne un boîtier de traitement thermique, en particulier un boîtier de chauffage, ventilation et/ou climatisation, pour le traitement thermique d'un flux d'air propre à être distribué dans un habitacle de véhicule automobile.

L'invention trouve une application particulièrement avantageuse dans le domaine des équipements de chauffage, ventilation et/ou climatisation des véhicules automobiles.

Actuellement, les véhicules automobiles sont pour la plupart équipés d'un boîtier de traitement thermique destiné à traiter thermiquement un flux d'air, appelé aussi boîtier de chauffage, ventilation et/ou climatisation dans le cadre d'un appareil de chauffage, ventilation et/ou climatisation.

Le document EP 306 241 A, qui est considéré comme l'art antérieur le plus proche, divulgue un boîtier de traitement thermique d'un flux d'air d'un type connu.

Un boîtier de traitement thermique est constitué par une enceinte, notamment en matière plastique, située dans l'habitacle du véhicule, en particulier à l'avant de l'habitacle du véhicule, dans laquelle sont disposés les divers composants permettant un traitement thermique et/ou aéraulique d'un flux d'air préalablement à sa distribution dans diverses zones de l'habitacle du véhicule.

Parmi ces composants, on peut distinguer, d'une part, les échangeurs de chaleur, tels qu'un évaporateur, un radiateur ou aérotherme et/ou un radiateur additionnel, en particulier électrique. L'évaporateur est destiné à refroidir et déshumidifier le flux d'air introduit dans le boîtier de traitement thermique. Le radiateur, ou aérotherme, et/ou le radiateur additionnel sont destinés à réchauffer le flux d'air introduit dans le boîtier de traitement thermique et, préférentiellement, ayant traversé préalablement l'évaporateur.

On peut distinguer, d'autre part, les moyens de traitement proprement dit du flux d'air traversant des échangeurs. Plus précisément, un groupe moto-ventilateur comportant une turbine, ou pulseur, placée à l'entrée du boîtier de traitement thermique entraîne le flux d'air à traiter thermiquement provenant de l'extérieur du véhicule et/ou de l'habitacle vers l'évaporateur.

L'évaporateur fait également partie d'un circuit de climatisation dans lequel circule un fluide réfrigérant subissant un cycle thermodynamique défini et comportant essentiellement un compresseur, un condenseur et un organe de détente, situés dans l'espace sous capot.

Le flux d'air refroidi ayant traversé l'évaporateur est séparé en deux flux d'air, dirigés vers une chambre de mixage à travers, respectivement, un conduit de chauffage contenant le radiateur, ou aérotherme, et/ou le radiateur additionnel, et apte à permettre le chauffage du flux d'air traversant le conduit de chauffage à la traversée du radiateur, ou aérotherme, et/ou le radiateur additionnel, et un conduit de transmission agencé en parallèle du conduit de chauffage et amenant le flux d'air ayant traversé l'évaporateur directement dans la chambre de mixage. Les deux flux d'air issus respectivement du conduit de chauffage et du conduit de transmission se rejoignent dans la chambre de mixage afin d'obtenir un flux d'air mixé dont la température peut être ajustée par des moyens de mixage aptes à faire varier la proportion du flux d'air dirigé vers le conduit de chauffage et du flux d'air dirigé vers le conduit de transmission à l'intérieur de la chambre de mixage.

Par ailleurs, des moyens de distribution installés dans le boîtier de traitement thermique permettent de répartir le flux d'air mixé sortant de la chambre de mixage entre différentes conduites de sortie débouchant respectivement en diverses zones de l'habitacle, notamment au niveau d'un pare-brise pour le dégivrage, à travers une planche de bord pour la ventilation de l'habitacle et vers une zone disposée au niveaux des pieds des passagers avant du véhicule.

De façon habituelle, les fonctions de mixage et de distribution sont séparées, l'utilisateur disposant, pour chaque fonction, d'un organe de commande indépendant transmettant des consignes, choisies au niveau d'un tableau de commande, aux moyens de mixage et aux moyens de distribution disposés dans le boîtier de traitement thermique, en particulier par des câbles mécaniques ou des actionneurs électriques. Il est ainsi possible de régler individuellement la température du flux d'air mixé sortant de la chambre de mixage et la répartition de ce flux d'air mixé entre les différentes zones de l'habitacle. Ce mode de mise en oeuvre du boîtier de traitement thermique peut être qualifié de "confort" du fait qu'il permet, par des consignes de température et de distribution indépendantes, de satisfaire les multiples exigences de confort exprimées par les passagers du véhicule. Par ailleurs, l'indépendance des consignes de température et de distribution permet d'obtenir tous types de configurations aérothermiques dans les diverses zones de l'habitacle.

Par ailleurs, il existe aussi une autre configuration possible pour un boîtier de traitement thermique, pouvant être qualifiée de "bas coût", dans laquelle les fonctions de mixage et de distribution sont couplées. Les consignes de température et de répartition sont alors liées. L'utilisateur dispose d'un organe de commande unique permettant de régler le couple "température/distribution" qu'il souhaite obtenir. Dans ce cadre, les options de confort sont en général limitées aux situations les plus fréquentes et la position de distribution est intimement liée à la température choisie et, réciproquement, la température choisie est intimement liée à la position de distribution. Par exemple, il est possible d'avoir la distribution d'un flux d'air chaud aux pieds, notamment en hiver, ou un flux d'air refroidi vers l'habitacle, notamment en été.

Toutefois, les architectures actuellement développées pour les boîtiers de traitement thermique dites "bas coût" sont optimisées en ce sens et n'offrent pas la possibilité d'être configurées pour y implanter facilement une version dite "confort".

Aussi, un but de l'invention est de proposer un boîtier de traitement thermique d'un flux d'air, comprenant des moyens de mixage pour canaliser le flux d'air vers des moyens de traitement thermique du flux d'air pour obtenir un flux d'air mixé et des moyens de distribution du flux d'air mixé, qui permettrait de décliner une même architecture de boîtier de traitement thermique selon les versions dites "bas coût" et "confort".

Ce but est atteint, conformément à l'invention, grâce à un boîtier suivant les caractéristiques des revendications 1 ou 2.

Conformément à l'invention, le boîtier de traitement thermique comporte un logement unique apte à recevoir indifféremment :
- des moyens de mixage et des moyens de distribution couplés mécaniquement commandés par un organe de commande unique,
- des moyens de mixage et des moyens de distribution découplés mécaniquement respectivement commandés par des organes de commande indépendants.

On entend ici par "logement" un volume disponible dans le boîtier de traitement thermique pour y implanter les moyens de mixage et les moyens de distribution et leur permettre d'effectuer les mouvements nécessaires pour qu'ils puissent exercer leur fonction respective de mixage de flux d'air chaud et froid dans la chambre de mixage et de distribution du flux d'air mixé dans les différentes zones de l'habitacle.

Ainsi, le boîtier de traitement thermique selon l'invention peut être décliné très facilement en une version dite "bas coût" et une version dite "confort" en disposant dans le logement unique soit des moyens de mixage et des moyens de distribution couplés mécaniquement dans la version dite "bas coût", soit des moyens de mixage et des moyens de distribution découplés mécaniquement dans la version dite "confort".

Selon un premier mode de réalisation de l'invention, le logement unique comprend un compartiment unique apte à recevoir indifféremment, d'une part, les moyens de mixage et les moyens de distribution couplés mécaniquement, et, d'autre part, les moyens de mixage et les moyens de distribution découplés mécaniquement.

Plus particulièrement, les moyens de mixage et les moyens de distribution couplés mécaniquement sont des volets, notamment du type "tambour", aptes à tourner simultanément autour d'un même axe de rotation. De préférence, dans ce cas, le compartiment unique constituant le logement unique a sensiblement une forme de cylindre de révolution dont l'axe correspond à l'axe de rotation des volets.

Pour obtenir des moyens de mixage et des moyens de distribution couplés mécaniquement, plusieurs solutions sont possibles. Selon une première solution, les moyens de mixage et les moyens de distribution couplés mécaniquement sont manufacturés en une seule pièce, en particulier obtenus par moulage. Selon une deuxième solution, les moyens de mixage et les moyens de distribution couplés mécaniquement sont formés de pièces distinctes assemblées rigidement entre elles. Selon une troisième solution, les moyens de mixage et les moyens de distribution couplés mécaniquement sont formés de pièces distinctes couplées par un moyen cinématique, en particulier de l'organe de commande unique.

S'agissant des moyens de mixage et des moyens de distribution découplés mécaniquement, l'invention prévoit notamment que les moyens de mixage et les moyens de distribution sont des volets, notamment de type "tambour", aptes à tourner indépendamment autour d'un même axe de rotation.

Dans une première variante, le volet de mixage et le volet de distribution présentent un même angle de débattement en rotation. Dans une deuxième variante, le volet de mixage et le volet de distribution présentent des angles de débattement en rotation différents.

Selon un deuxième mode de réalisation de l'invention, le logement unique comprend deux compartiments aptes à recevoir indifféremment, d'une part, les moyens de mixage et les moyens de distribution couplés mécaniquement, et, d'autre part, les moyens de mixage et les moyens de distribution découplés mécaniquement.

Deux options peuvent alors être envisagées. Selon une première option, un compartiment est apte à recevoir les moyens de mixage et les moyens de distribution couplés mécaniquement. Cette première option couvre une variante de la version dite "bas coût" du boîtier de traitement thermique.

Selon une deuxième option, un premier compartiment est apte à recevoir les moyens de mixage et un second compartiment est apte à recevoir les moyens de distribution. Cette option couvre une autre variante de la version dite "bas coût" du boîtier de traitement thermique, si les moyens de mixage et les moyens de distribution sont couplés mécaniquement par un moyen cinématique, notamment de l'organe de commande unique, et une variante de la version dite "confort", si les moyens de mixage et les moyens de distribution sont découplés mécaniquement.

Avantageusement, les moyens de mixage et les moyens de distribution sont des volets "tambour" aptes à tourner autour d'axes de rotation différents. Le logement unique est alors composé de deux compartiments de forme sensiblement cylindrique de révolution d'axes distincts, l'axe de révolution du premier compartiment définissant l'axe de rotation des volets de mixage et l'axe de révolution du deuxième compartiment définissant l'axe de rotation des volets de distribution.

D'autres caractéristiques et avantages de l'invention apparaîtront à l'examen de la description qui va suivre en regard des dessins annexés, donnés à titre d'exemples non limitatifs, qui pourront servir à compléter la compréhension de la présente invention et l'exposé de sa réalisation mais aussi, le cas échéant, contribuer à sa définition sur lesquels:

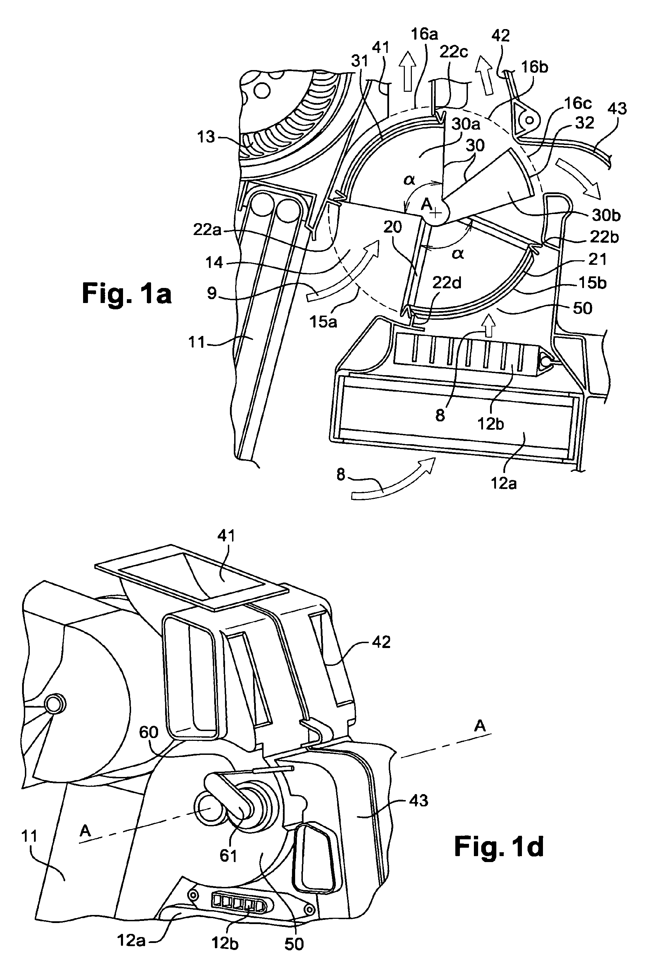

- La figure 1a est une vue en coupe d'un boîtier de chauffage, ventilation et/ou climatisation selon un premier mode de réalisation de l'invention,
- La figure 1 b est une vue en perspective des volets de mixage et de distribution selon le premier mode de réalisation de la présente invention,
- La figure 1c est une vue éclatée des volets de mixage et de distribution de la figure 1b selon le premier mode de réalisation de la présente invention,
- La figure 1d est une vue en perspective du boîtier de chauffage, ventilation et/ou climatisation de la figure 1a en version dite "bas coût",
- Les figures 2a et 2b sont des vues en perspective montrant les organes de commande des volets de mixage et de distribution du boîtier de chauffage, ventilation et/ou climatisation de la figure 1a en version dite "confort",
- La figure 3 est une vue en coupe d'une variante de réalisation du boîtier de chauffage, ventilation et/ou climatisation de la figure 1a en version dite "confort",
- La figure 4a est une vue en coupe d'un boîtier de chauffage, ventilation et/ou climatisation selon un deuxième mode de réalisation de la présente invention,
- La figure 4b est une vue en perspective montrant un organe de commande des volets de mixage et de distribution du boîtier de chauffage, ventilation et/ou climatisation de la figure 4a en version dite "bas coût", et
- La figure 5 est une vue en coupe d'une variante de réalisation du boîtier de chauffage, ventilation et/ou climatisation de la figure 4a en version dite "bas coût".

La figure 1a est une vue en coupe d'un boîtier de chauffage, ventilation et/ou climatisation selon un premier mode de réalisation de l'invention et la figure 1d est une vue en perspective du boîtier de chauffage, ventilation et/ou climatisation de la figure 1a en version dite "bas coût".

Les figures 1a et 1d présentent un boîtier de chauffage, ventilation et/ou climatisation permettant le traitement aéraulique et thermique d'un flux d'air. Le boîtier de chauffage, ventilation et/ou climatisation est apte à loger un évaporateur 11 d'un circuit de climatisation d'un véhicule automobile. L'évaporateur 11 est destiné à refroidir le flux d'air généré par un pulseur 13 et provenant de l'extérieur du véhicule et/ou de l'intérieur de l'habitacle du véhicule.

Comme décrit à la figure 1a, une partie du flux d'air 9, dit flux d'air froid 9, ainsi refroidi est dirigée directement vers une chambre de mixage 14. Une autre partie du flux d'air 8, dit flux d'air chaud 8, est dirigée vers des moyens de chauffage tels qu'un radiateur 12a, ou aérotherme, notamment du type à circulation d'un fluide caloporteur, par exemple un liquide de refroidissement du moteur du véhicule et, éventuellement, un radiateur additionnel 12b, notamment électrique. Le flux d'air chaud 8 réchauffé par la traversé du radiateur 12a et/ou du radiateur additionnel 12b rejoint le flux d'air froid 9 dans la chambre de mixage 14.

L'évaporateur 11, le radiateur 12a, ou aérotherme et le radiateur additionnel 12b constituent des moyens de traitement thermique permettant d'obtenir un flux d'air mixé dans la chambre de mixage 14.

La température du flux d'air mixé dans la chambre de mixage 14 dépend des proportions du flux d'air froid 9 et du flux d'air chaud 8 entrant dans la chambre de mixage 14. Afin de permettre à l'utilisateur d'ajuster la température du flux d'air à distribuer dans l'habitacle du véhicule à la valeur qu'il souhaite obtenir, il est prévu dans le boîtier de chauffage, ventilation et/ou climatisation des moyens de mixage dont la fonction est de faire varier les proportions du flux d'air froid 9 et du flux d'air chaud 8 dans la chambre de mixage 14.

Le flux d'air froid 9 et le flux d'air chaud 8 pénètrent respectivement dans la chambre de mixage 14 par des ouvertures d'entrée du flux d'air froid 15a et d'entrée du flux d'air chaud 15b.

Dans le mode de réalisation de la figure 1a, les moyens de mixage sont constitués par un volet de mixage 20. De façon particulièrement avantageuse, le volet de mixage 20 est un volet "tambour" muni d'une paroi d'obturation 21, préférentiellement de profil cylindrique.

Le volet de mixage 20 est mobile en rotation autour d'un axe A-A de manière à ce que la paroi d'obturation 21 obture, lors de sa rotation autour de l'axe A-A, plus ou moins les ouvertures d'entrée du flux d'air froid 15a et d'entrée du flux d'air chaud 15b dans la chambre de mixage 14. De tels moyens de mixage permettent d'obtenir des proportions variant continûment de 0% à 100% de flux d'air chaud 8 entrant dans la chambre de mixage 14 et, de façon complémentaire, des proportions variant continûment de 100% à 0% de flux d'air froid 9 entrant dans la chambre de mixage 14.

Dans la position du volet de mixage 20 de la figure 1a dite "tout froid", l'ouverture d'entrée du flux d'air chaud 15b est obturée à 100% tandis que l'ouverture d'entrée du flux d'air froid 15a est complètement ouverte de sorte que la chambre de mixage 14 ne reçoit que le flux d'air froid 9.

La situation inverse peut être obtenue après une rotation d'un angle de débattement α du volet de mixage 20 autour de l'axe A-A. Après rotation de l'angle de débattement α du volet de mixage 20 autour de l'axe A-A, le volet de mixage 20 est dans une position dite "tout chaud" dans laquelle l'ouverture d'entrée du flux d'air chaud 15b est ouverte à 100% tandis que l'ouverture d'entrée du flux d'air froid 15a est complètement fermée de sorte que la chambre de mixage 14 ne reçoit que le flux d'air chaud 8.

Bien évidemment, le volet de mixage 20 peut prendre toutes les positions intermédiaires de mixage permettant de faire pénétrer le flux d'air froid 9 et le flux d'air chaud 8 dans la chambre de mixage en proportions variables.

Sur la figure 1a, le débattement du volet de mixage 20 est déterminé par des portées 22a, 22b et 22d. Les portées 22a et 22d, respectivement 22b et 22d, viennent en contact avec le volet de mixage 20 dans les deux positions extrêmes définies précédemment afin d'assurer une fermeture étanche de l'ouverture d'entrée du flux d'air froid 15a ou de l'ouverture d'entrée du flux d'air chaud 15b selon les configurations. Ainsi, l'angle de débattement α du volet de mixage 20 de mixage est limité par les portées 22a et 22d, d'une part, et les portées 22b et 22d, d'autre part.

Le flux d'air mixé dans la chambre de mixage 14 est ensuite réparti entre différentes conduites de sortie. Les figures 1a et 1d montrent un mode de réalisation comportant trois conduites, respectivement une conduite de dégivrage 41, pour la diffusion du flux d'air dans une zone du pare-brise, une conduite d'aération 42, pour la diffusion du flux d'air dans une zone de ventilation de l'habitacle, et une conduite 'pieds' 43, conduisant le flux d'air vers une zone basse de l'habitacle, en particulier vers les pieds des passagers avant. La conduite de dégivrage 41, la conduite d'aération 42 et la conduite 'pieds' 43 comprennent respectivement une ouverture de sortie 16a, 16b et 16c pour le passage du flux d'air mixé depuis la chambre de mixage 14 vers la conduite de dégivrage 41, la conduite d'aération 42 et la conduite "pieds" 43.

La répartition du flux d'air mixé entre les différentes conduites 41, 42 et 43 est réalisée par des moyens de distribution. Dans l'exemple de la figure 1a et de façon particulièrement avantageuse, les moyens de distribution sont réalisés par un volet de distribution 29 de type "tambour", présentant deux secteurs 30a et 30b munis respectivement de parois d'obturation cylindriques 31 et 32.

Le volet de distribution 29 est mobile en rotation autour de l'axe A-A, identique à l'axe de rotation du volet de mixage 20, de manière à ce que les parois d'obturation cylindriques 31 et 32 puissent obturer, complètement ou partiellement, deux des trois ouvertures de sortie 16a, 16b et 16c associées aux conduites 41, 42 et 43 et laisser la troisième ouverte.

Dans la position du volet de distribution 29 de la figure 1a, les ouvertures de sortie 16a et 16c, respectivement de la conduite de dégivrage 41 et de la conduite "pieds" 43, sont obturées, complètement ou partiellement, tandis que l'ouverture de sortie 16b, propre à la conduite d'aération 42, est complètement ouverte.

Après une rotation d'angle de débattement α/2 du volet de distribution 29 autour de l'axe A-A dans le sens horaire, l'ouverture de sortie 16c, propre à la conduite "pieds" 43, est complètement ouverte, les ouvertures de sortie 16a et 16b, respectivement de la conduite de dégivrage 41 et de la conduite d'aération 42, étant obturées, complètement ou partiellement.

Enfin, après une nouvelle rotation d'angle de débattement α/2 du volet de distribution 29 autour de l'axe A-A dans le sens horaire, seule l'ouverture 16a, propre à la conduite de dégivrage 41, est complètement ouverte, les ouvertures de sortie 16b et 16c, respectivement de la conduite d'aération 42 et de la conduite "pieds" 43, étant obturées, complètement ou partiellement. Sur la figure 1a, le débattement du volet de distribution 29 est déterminé par des portées 22a et 22c. Ainsi, l'angle de débattement α du volet de distribution 29 est limité par les portées 22a et 22c.

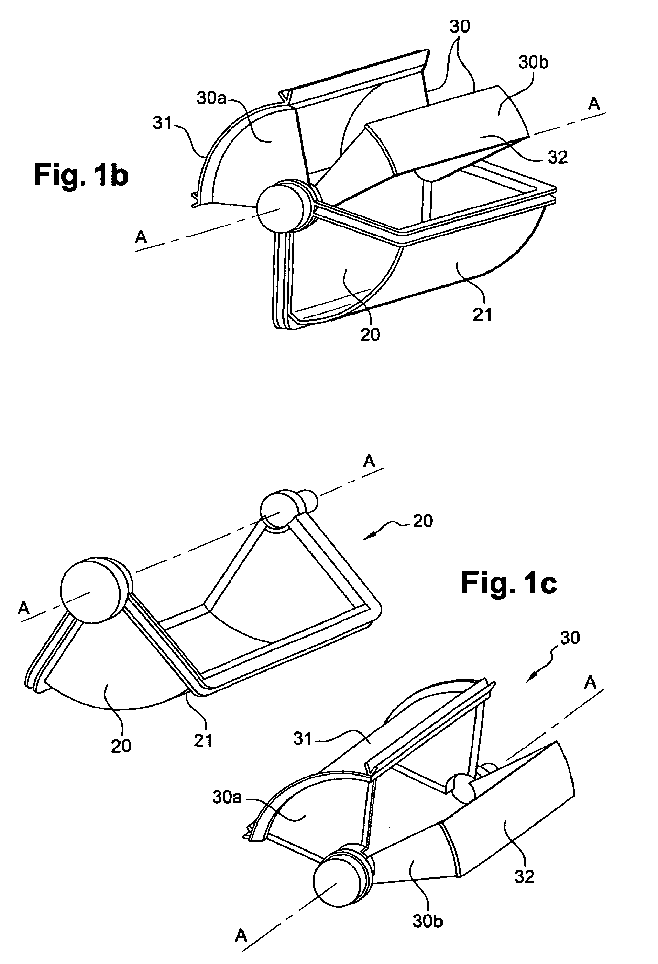

Les figures 1b et 1 c montrent respectivement une vue en perspective et une vue éclatée des volets de mixage 20 et de distribution 29 selon le premier mode de réalisation de la présente invention, tels qu'ils apparaissent sur la figure 1a.

L'ensemble des volets de mixage 20 et de distribution 29 est disposé dans le boîtier de chauffage, ventilation et/ou climatisation des figures 1a et 1d à l'intérieur d'un logement à un seul compartiment, préférentiellement de forme sensiblement cylindrique de révolution d'axe A-A, correspondant substantiellement à la chambre de mixage 14. Sur la figure 1d, on peut mieux se représenter la position dans le boîtier de chauffage, ventilation et/ou climatisation du volume cylindrique 50 occupé par le compartiment unique dans lequel sont disposés les volets de mixage 20 et de distribution 29.

Le boîtier de chauffage, ventilation et/ou climatisation décrit aux figures 1a à 1d présente l'avantage de pouvoir être décliné, pour une architecture unique, en deux versions possibles, à savoir une version dite " bas coût" et une version dite "confort" qui vont maintenant être détaillées.

Dans la version dite "bas coût", le volet de mixage 20 de mixage et le volet de distribution 29 sont couplés mécaniquement. Par "couplés mécaniquement", il faut comprendre le fait que le volet de mixage 20 et le volet de distribution 29 sont solidaires dans leur mouvement autour de l'axe A-A de rotation commun. Le choix des réglages est dans ce cas plus limité puisqu'il n'est pas possible de régler séparément la température et la distribution du flux d'air, mais seulement un couple "température/distribution" choisi parmi les situations typiques les plus fréquentes, comme le couple "air chaud/dégivrage", par exemple en période d'hiver, et "air froid/ventilation", par exemple en période d'été. Par contre, il n'est besoin que d'un seul organe de commande pour commander la rotation d'ensemble des volets de mixage 20 et de distribution 29, d'où l'aspect "bas coût" de cette version.

Le couplage mécanique des volets de mixage 20 et de distribution 29 peut être réalisé de plusieurs manières. Par exemple, les volets de mixage 20 et de distribution 29 peuvent être manufacturés en une seule pièce, notamment par moulage, ou encore, former des pièces différentes, comme sur la figure 1c, et être assemblées rigidement l'une à l'autre.

La figure 1d illustre un autre exemple de couplage mécanique des volets de mixage 20 et de distribution 29 qui consiste à coupler les axes de rotation des volets de mixage 20 et de distribution 29 par un moyen cinématique de l'organe de commande unique. Sur la figure 1d, l'organe de commande unique est un câble 60, par exemple de type 'Bowden', entraînant en rotation un levier 61, portant deux pignons engrenant respectivement avec un pignon solidaire du volet de mixage 20 dans sa rotation autour de l'axe A-A et avec un pignon solidaire du volet de distribution 29 dans sa rotation autour de l'axe A-A.

En version dite "confort", les volets de mixage 20 et de distribution 29 sont découplés mécaniquement et peuvent donc tourner autour du même axe A-A indépendamment l'un de l'autre, autorisant ainsi toutes les combinaisons de réglage possibles entre température et distribution, pour un plus grand confort des passagers du véhicule. Par "découplés mécaniquement", il faut comprendre le fait que le volet de mixage 20 et le volet de distribution 29 sont indépendants dans leur mouvement autour de l'axe A-A de rotation commun.

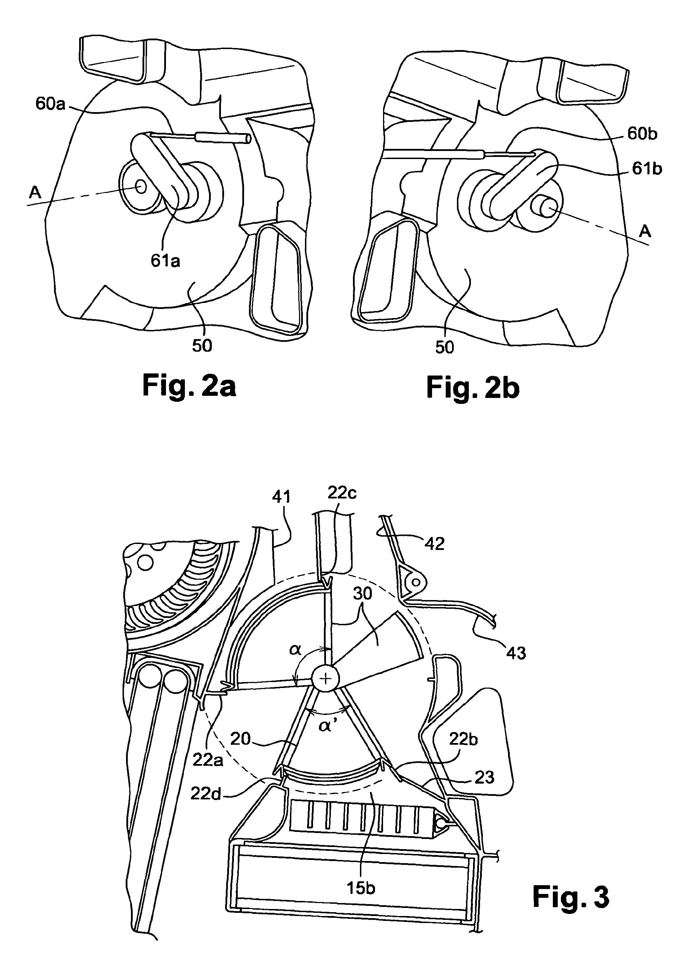

Dans la version dite "confort", les volets de mixage 20 et de distribution 29 sont commandés en rotation par des organes de commande indépendants. Les figures 2a et 2b montrent des vues en perspective des organes de commande des volets de mixage 20 et de distribution 29 du boîtier de chauffage, ventilation et/ou climatisation de la figure 1a en version dite "confort".

Selon l'exemple des figures 2a et 2b, les organes de commande sont constitués par des câbles 60a et 60b distincts, par exemple de type "Bowden", aptes à entraîner des leviers 61a et 61b, situés de part et d'autre du boîtier de chauffage, ventilation et/ou climatisation au moyen de pignons engrenant respectivement avec des pignons solidaires des volets de mixage 20 et de distribution 29 dans leur rotation autour de l'axe A-A.

Ainsi, on comprend que le boîtier de chauffage, ventilation et/ou climatisation qui vient d'être décrit présente le grand avantage de permettre, de manière très simple, d'équiper les véhicules d'un système de traitement d'air selon deux versions, dites "bas coût" ou "confort", avec une même architecture de boîtier de chauffage, ventilation et/ou climatisation. Cet avantage est obtenu du fait que le boîtier de chauffage, ventilation et/ou climatisation selon l'invention comporte un logement unique pouvant recevoir indifféremment les moyens de mixage et les moyens de distribution, qu'ils soient couplés ou découplés mécaniquement.

La figure 3 est une vue en coupe d'une variante de réalisation du boîtier de chauffage, ventilation et/ou climatisation de la figure 1a en version dite "confort" et montre une variante de réalisation du boîtier de chauffage, ventilation et/ou climatisation de la figure 1a dans laquelle l'angle de débattement α' du volet de mixage 20 est différent de l'angle de débattement α du volet de distribution 29. Selon le présent exemple, l'angle de débattement α' du volet de mixage 20 est plus petit que l'angle de débattement α du volet de distribution 29.

Un tel agencement est particulièrement adapté pour des raisons tenant, par exemple, à des contraintes liées à l'organe de commande du volet de mixage 20. Dans une telle configuration, il est avantageux qu'une des portées, en particulier la portée 22b, soit décalée, par rapport à la position qu'elle avait selon l'exemple de réalisation de la figure 1a. Un tel décalage est rendu nécessaire afin d'assurer l'étanchéité par le volet de mixage 20, en position de fermeture, de l'ouverture d'entrée du flux d'air chaud 15b.

Selon la disposition montrée sur la figure 3, la portée 22b est agencée sur une paroi supplémentaire 23. Par ailleurs la paroi supplémentaire 23 ainsi disposée permet de canaliser le flux d'air chaud sur l'ouverture d'entrée flux d'air chaud 15b.

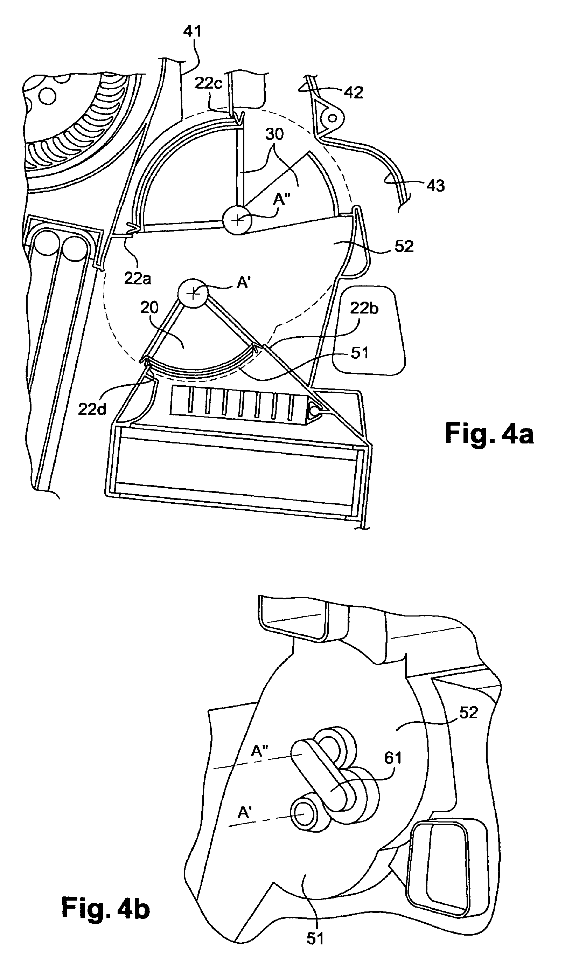

Les figures 4a et 4b sont respectivement une vue en coupe et une vue en perspective d'un boîtier de chauffage, ventilation et/ou climatisation selon un deuxième mode de réalisation de la présente invention.

Sur les figures 4a et 4b, le boîtier de chauffage, ventilation et/ou climatisation comporte un logement unique à deux compartiments pour recevoir respectivement le volet de mixage 20 et le volet de distribution 29 couplés mécaniquement ou non selon la version envisagée, dite "bas coût" ou "confort".

Plus précisément, le volet de mixage 20 occupe un premier compartiment 51, préférentiellement de forme cylindrique, et dans lequel le volet de mixage 20 peut tourner autour d'un axe de rotation A'-A'. De plus, le volet de distribution 29 occupe un deuxième compartiment 52, préférentiellement de forme cylindrique, et dans lequel le volet de distribution 29 peut tourner autour d'un axe de rotation A"-A".

Selon un mode réalisation préféré, l'axe de rotation A'-A' du volet de mixage 20 est parallèle à l'axe de rotation A"-A" du volet de distribution 29.

Dans la version dite "bas coût", le couplage mécanique entre le volet de mixage 20 et le volet de distribution 29 est réalisé par un moyen cinématique comprenant un levier 61 entraînant un pignon unique engrenant simultanément avec un pignon solidaire du volet de mixage 20 dans sa rotation autour de l'axe A'-A' et avec un pignon solidaire du volet de distribution 29 dans sa rotation autour de l'axe A"-A". De manière analogue à la figure 1d, le levier 61 peut être commandé par un câble unique, non représenté sur la figure 4b.

Dans la version dite "confort", le volet de mixage 20 et le volet de distribution 29 sont commandés en rotation par des organes de commande indépendants, similaires, par exemple, aux câbles 60a et 60b des figures 2a et 2b, et aptes à entraîner séparément des leviers situés de part et d'autre du boîtier de chauffage, ventilation et/ou climatisation et solidaires respectivement des volets de mixage 20 et de distribution 29 dans leur rotation autour des axes A'-A' et A"-A".

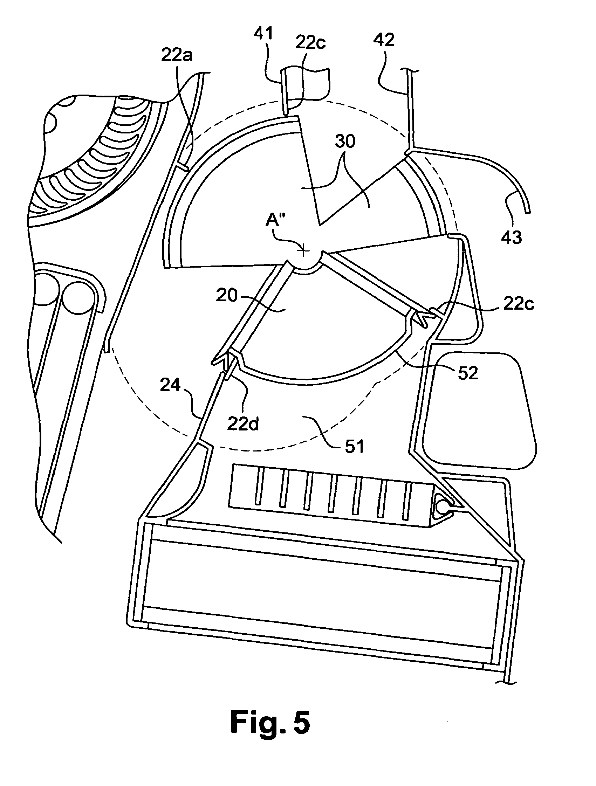

La figure 5 est une vue en coupe d'une variante de réalisation du boîtier de chauffage, ventilation et/ou climatisation de la figure 4a en version dite "bas coût". Dans cette variante, les volets de mixage 20 et de distribution 29 sont disposés coaxiaux autour de l'axe A"-A" dans le deuxième compartiment 52 et se retrouvent dans une configuration semblable à celle de la figure 1a. Le couplage mécanique entre les volets de mixage 20 et de distribution 29 est réalisé par moulage en une seule pièce ou par assemblage rigide ou par l'intermédiaire de la même cinématique que sur la figure 1d.

Ce deuxième mode de réalisation à deux compartiments présente le même avantage que celui à un seul compartiment précédemment décrit, à savoir la possibilité d'offrir des versions dites "bas coût" ou "confort" avec une même architecture de boîtier de chauffage, ventilation et/ou climatisation. Cet avantage est obtenu dans ce deuxième mode de réalisation du fait que les deux compartiments constituent un logement unique pouvant recevoir indifféremment, comme on l'a monté précédemment, les moyens de mixage 20 et les moyens de distribution 29 qu'ils soient couplés ou découplés mécaniquement.

Selon l'agencement particulier de la figure 5, il est avantageux qu'une des portées, en particulier la portée 22d, soit décalée, par rapport à la position qu'elle avait selon l'exemple de réalisation de la figure 1a. Un tel décalage est rendu nécessaire afin d'assurer l'étanchéité par le volet de mixage 20 en position de fermeture de l'ouverture d'entrée du flux d'air chaud 15b.

Selon la disposition montrée sur la figure 5, la portée 22d est agencée sur une paroi supplémentaire 24. Par ailleurs la paroi supplémentaire 24 ainsi disposée permet de canaliser le flux d'air chaud sur l'ouverture d'entrée flux d'air chaud 15b et le flux d'air froid sur l'ouverture d'entrée flux d'air froid 15a.

Les divers exemples de réalisation décrits précédemment intègrent des organes de commande constitués par de câbles, par exemple de type "Bowden". Toutefois, la présente invention couvre également les modes de réalisation dont les organes de commande sont constitués par des actionneurs électriques ou analogues ou tout autre moyen de commande équivalent.

De même, dans le cadre de versions dite "confort", il a été décrit des variantes dans lesquelles le volet de mixage 20 et le volet de distribution 29 sont commandés en rotation par des organes de commande indépendants, situés de part et d'autre du boîtier de chauffage, ventilation et/ou climatisation. Néanmoins, il est envisageable, dans le cadre de la présente invention, que les organes de commande soient indépendants tout en étant disposés d'un même coté du boîtier de chauffage, ventilation et/ou climatisation.

La présente invention a été décrite en relation avec un boîtier de chauffage, ventilation et/ou climatisation intégrant un évaporateur 11, un radiateur 12a ou aérotherme et/ou un radiateur additionnel 12b. Néanmoins, la présente invention trouve également une application à un boîtier de chauffage, ventilation dans lequel est uniquement logé un radiateur 12a ou aérotherme et/ou un radiateur additionnel 12b, l'évaporateur 11 ayant été ôté.

Ainsi, dans la présente description, le terme "boîtier de traitement thermique" doit être pris dans son sens générique et couvre l'ensemble des configurations décrites précédemment et notamment les boîtiers de chauffage, ventilation et/ou climatisation et les boîtiers de chauffage, ventilation.

Enfin, la présente invention couvre également les modes de réalisation dans lesquels le volet de mixage 20 et le volet de distribution 29 sont de type "drapeau" ou "papillon".

Bien évidemment, l'invention n'est pas limitée aux modes de réalisation décrits précédemment et fournis uniquement à titre d'exemple. Elle englobe diverses modifications, formes alternatives et autres variantes que pourra envisager l'homme du métier dans le cadre de la présente invention telle que définie par les revendications.

## Revendications

1. Boîtier de traitement thermique d'un flux d'air, comprenant des moyens de mixage (20) pour canaliser le flux d'air vers des moyens de traitement thermique (11, 12a, 12b) du flux d'air pour obtenir un flux d'air mixé dans une chambre de mixage (14) et des moyens de distribution (29) du flux d'air mixé, **caractérisé en ce que** le boîtier de traitement thermique comporte un logement unique comprenant un compartiment unique (50) de forme sensiblement cylindrique de révolution, correspondant substantiellement à la chambre de mixage (14), et dans lequel sont disposés les moyens de mixage (20) et les moyens de distribution (29), le logement unique étant apte à recevoir indifféremment :
- les moyens de mixage (20) et les moyens de distribution (29) couplés mécaniquement commandés par un organe de commande (60) unique,
- les moyens de mixage (20) et les moyens de distribution (29) découplés mécaniquement respectivement commandés par des organes de commande (60a, 60b) indépendants.

2. Boîtier de traitement thermique d'un flux d'air, comprenant des moyens de mixage (20) pour canaliser le flux d'air vers des moyens de traitement thermique (11, 12a, 12b) du flux d'air pour obtenir un flux d'air mixé dans une chambre de mixage (14) et des moyens de distribution (29) du flux d'air mixé, **caractérisé en ce que** le boîtier de traitement thermique comporte un logement unique comprenant un premier compartiment (51) et un deuxième compartiment (52) respectivement de forme cylindrique et dans lequel sont disposés les moyens de mixage (20) et les moyens de distribution (29), le logement unique apte à recevoir indifféremment :
- les moyens de mixage (20) et les moyens de distribution (29) couplés mécaniquement commandés par un organe de commande (60) unique,
- les moyens de mixage (20) et les moyens de distribution (29) découplés mécaniquement respectivement commandés par des organes de commande (60a, 60b) indépendants.

3. Boîtier de traitement thermique selon la revendication 1 ou 2, dans lequel les moyens de mixage (20) et les moyens de distribution (29) couplés mécaniquement sont manufacturés en une seule pièce.

4. Boîtier de traitement thermique selon la revendication 1 ou 2, dans lequel les moyens de mixage (20) et les moyens de distribution (29) couplés mécaniquement sont formés de pièces distinctes assemblées rigidement.

5. Boîtier de traitement thermique selon la revendication 1 ou 2, dans lequel les moyens de mixage (20) et les moyens de distribution (29) couplés mécaniquement sont formés de pièces distinctes couplées par au moins un moyen cinématique (61) de l'organe de commande (60) unique.

6. Boîtier de traitement thermique selon l'une quelconque des revendications 1 à 5, dans lequel les moyens de mixage (20) et les moyens de distribution (29) couplés mécaniquement sont logés dans le compartiment unique (50) ou dans le premier compartiment (51) ou dans le second compartiment (52).

7. Boîtier de traitement thermique selon l'une quelconque des revendications 1 à 5, dans lequel le premier compartiment (51) est apte à recevoir les moyens de mixage (20) et dans lequel le second compartiment (52) est apte à recevoir les moyens de distribution (29).

8. Boîtier de traitement thermique selon l'une quelconque des revendications 1 à 7, dans lequel les moyens de mixage (20) et les moyens de distribution (29) couplés mécaniquement sont des volets aptes à tourner simultanément autour d'un même axe de rotation (A-A, A'-A', A"-A").

9. Boîtier de traitement thermique selon l'une quelconque des revendications 1 à 7, dans lequel les moyens de mixage (20) et les moyens de distribution (29) découplés mécaniquement sont des volets aptes à tourner indépendamment autour d'un même axe de rotation (A-A, A'-A', A"-A").

10. Boîtier de traitement thermique selon l'une quelconque des revendications 1 à 7, dans lequel les moyens de mixage (20) et les moyens de distribution (29) sont des volets aptes à tourner autour d'axes de rotation (A'-A', A"-A") différents.

11. Boîtier de traitement thermique selon l'une quelconque des revendications 1 à 10, dans lequel les moyens de mixage (20) et les moyens de distribution (29) sont des volets "tambour".

12. Boîtier de traitement thermique selon l'une quelconque des revendications 1 à 11, dans lequel le volet de mixage (20) et le volet de distribution (29) présentent un même angle de débattement en rotation (α).

13. Boîtier de traitement thermique selon l'une quelconque des revendications 1 à 11, dans lequel le volet de mixage (20) et le volet de distribution (29) présentent des angles de débattement en rotation (α, α') différents.

## Patentansprüche

1. Gehäuse zur Wärmebehandlung eines Luftstroms, umfassend Mittel zum Mischen (20), um den Luftstrom zu Wärmebehandlungsmitteln (11, 12a, 12b) des Luftstroms zu leiten, um einen Mischluftstrom in einer Mischkammer (14) zu erhalten, und Mittel zum Verteilen (29) des Mischluftstroms, **dadurch gekennzeichnet, dass** das Gehäuse zur Wärmebehandlung eine einzige Lagerung besitzt, umfassend ein einziges Abteil (50) von im Wesentlichen zylindrischer Umdrehungsform, im Wesentlichen entsprechend der Mischkammer (14), in dem die Mischhilfsmittel (20) und die Verteilungsmittel (29) angeordnet sind, wobei die einzige Lagerung geeignet ist, unterschiedslos Folgendes aufzunehmen:
- die Mischhilfsmittel (20) und die Verteilungsmittel (29), die mechanisch gekoppelt sind und von einem einzigen Steuerelement (60) gesteuert werden,
- die Mischhilfsmittel (20) und die Verteilungsmittel (29), die mechanisch entkoppelt sind und jeweils von unabhängigen Steuerelementen (60a, 60b) gesteuert werden.

2. Gehäuse zur Wärmebehandlung eines Luftstroms, umfassend Mittel zum Mischen (20), um den Luftstrom zu Wärmebehandlungsmitteln (11, 12a, 12b) des Luftstroms zu leiten, um einen Mischluftstrom in einer Mischkammer (14) zu erhalten, und Mittel zum Verteilen (29) des Mischluftstroms, **dadurch gekennzeichnet, dass** das Gehäuse zur Wärmebehandlung eine einzige Lagerung besitzt, umfassend ein erstes Abteil (51) und ein zweites Abteil (52) von jeweils zylindrischer Form, in dem die Mischhilfsmittel (20) und die Verteilungsmittel (29) angeordnet sind, wobei die einzige Lagerung geeignet ist, unterschiedslos Folgendes aufzunehmen:
- die Mischhilfsmittel (20) und die Verteilungsmittel (29), die mechanisch gekoppelt sind und von einem einzigen Steuerelement (60) gesteuert werden,
- die Mischhilfsmittel (20) und die Verteilungsmittel (29), die mechanisch entkoppelt sind und jeweils von unabhängigen Steuerelementen (60a, 60b) gesteuert werden.

3. Gehäuse zur Wärmebehandlung nach Anspruch 1 oder 2, bei dem die mechanisch gekoppelten Mischhilfsmittel (20) und Verteilungsmittel (29) aus einem Stück gefertigt sind.

4. Gehäuse zur Wärmebehandlung nach Anspruch 1 oder 2, bei dem die mechanisch gekoppelten Mischhilfsmittel (20) und Verteilungsmittel (29) von getrennten starr miteinander verbundenen Teilen gebildet sind.

5. Gehäuse zur Wärmebehandlung nach Anspruch 1 oder 2, bei dem die mechanisch gekoppelten Mischhilfsmittel (20) und Verteilungsmittel (29) von getrennten Teilen gebildet sind, die durch mindestens ein kinematisches Mittel (61) des einzigen Steuerelements (60) gekoppelt sind.

6. Gehäuse zur Wärmebehandlung nach einem der Ansprüche 1 bis 5, bei dem die mechanisch gekoppelten Mischhilfsmittel (20) und Verteilungsmittel (29) in dem einzigen Abteil (50) oder in dem ersten Abteil (51) oder in dem zweiten Abteil (52) angeordnet sind.

7. Gehäuse zur Wärmebehandlung nach einem der Ansprüche 1 bis 5, bei dem das erste Abteil (51) geeignet ist, die Mischhilfsmittel (20) aufzunehmen, und bei dem das zweite Abteil (52) geeignet ist, die Verteilungsmittel (29) aufzunehmen.

8. Gehäuse zur Wärmebehandlung nach einem der Ansprüche 1 bis 7, bei dem die mechanisch gekoppelten Mischhilfsmittel (20) und Verteilungsmittel (29) Klappen sind, die geeignet sind, sich gleichzeitig um eine selbe Drehachse (A-A, A'-A', A"-A") zu drehen.

9. Gehäuse zur Wärmebehandlung nach einem der Ansprüche 1 bis 7, bei dem die mechanisch entkoppelten Mischhilfsmittel (20) und Verteilungsmittel (29) Klappen sind, die geeignet sind, sich unabhängig voneinander um eine selbe Drehachse (A-A, A'-A', A"-A") zu drehen.

10. Gehäuse zur Wärmebehandlung nach einem der Ansprüche 1 bis 7, bei dem die Mischhilfsmittel (20) und die Verteilungsmittel (29) Klappen sind, die geeignet sind, sich um unterschiedliche Drehachsen (A'-A', A"-A") zu drehen.

11. Gehäuse zur Wärmebehandlung nach einem der Ansprüche 1 bis 10, bei dem die Mischhilfsmittel (20) und die Verteilungsmittel (29) "Trommel"-Klappen sind.

12. Gehäuse zur Wärmebehandlung nach einem der Ansprüche 1 bis 11, bei dem die Mischklappe (20) und die Verteilungsklappe (29) einen selben Ausschlagwinkel in Drehung (α) aufweisen.

13. Gehäuse zur Wärmebehandlung nach einem der Ansprüche 1 bis 11, bei dem die Mischklappe (20) und die Verteilungsklappe (29) unterschiedliche Ausschlagwinkel in Drehung (α, α') aufweisen.

## Claims

1. Thermal treatment box for treating an airflow, comprising mixing means (20) for channelling the airflow towards thermal treatment means (11, 12a, 12b) for treating the airflow in order to obtain a mixed airflow in a mixing chamber (14) and delivery means (29) for delivering the mixed airflow, **characterized in that** the thermal treatment box comprises a single housing comprising a single compartment (50) of substantially axi-symmetric shape, corresponding substantially to the mixing chamber (14), and in which the mixing means (20) and the delivery means (29) are placed, the single housing being capable of receiving, without distinction:
- the mixing means (20) and the delivery means (29) that are mechanically coupled controlled by a single control member (60),
- the mixing means (20) and the delivery means (29) that are mechanically decoupled respectively controlled by independent control members (60a, 60b).

2. Thermal treatment box for treating an airflow, comprising mixing means (20) for channelling the airflow towards thermal treatment means (11, 12a, 12b) for treating the airflow in order to obtain a mixed airflow in a mixing chamber (14) and delivery means (29) for delivering the mixed airflow, **characterized in that** the thermal treatment box comprises a single housing comprising a first compartment (51) and a second compartment (52) respectively of cylindrical shape and in which the mixing means (20) and the delivery means (29) are placed, the single housing being capable of receiving without distinction:
- the mixing means (20) and the delivery means (29) that are mechanically coupled controlled by a single control member (60),
- the mixing means (20) and the delivery means (29) that are mechanically decoupled respectively controlled by independent control members (60a, 60b).

3. Thermal treatment box according to Claim 1 or 2, in which the mixing means (20) and the delivery means (29) that are coupled mechanically are manufactured in a single piece.

4. Thermal treatment box according to Claim 1 or 2, in which the mixing means (20) and the delivery means (29) that are mechanically coupled are formed of distinct pieces that are assembled rigidly.

5. Thermal treatment box according to Claim 1 or 2, in which the mixing means (20) and the delivery means (29) coupled mechanically are formed of distinct pieces coupled by at least one kinematic means (61) of the single control member (60).

6. Thermal treatment box according to any one of Claims 1 to 5, in which the mixing means (20) and the delivery means (29) coupled mechanically are housed in the single compartment (50) or in the first compartment (51) or in the second compartment (52).

7. Thermal treatment box according to any one of Claims 1 to 5, in which the first compartment (51) is capable of receiving the mixing means (20) and in which the second compartment (52) is capable of receiving the delivery means (29).

8. Thermal treatment box according to any one of Claims 1 to 7, in which the mixing means (20) and the delivery means (29) coupled mechanically are baffles capable of turning simultaneously about one and the same rotation axis (A-A, A'-A', A"-A").

9. Thermal treatment box according to any one of Claims 1 to 7, in which the mixing means (20) and the delivery means (29) decoupled mechanically are baffles capable of turning independently about one and the same rotation axis (A-A, A'-A', A"-A").

10. Thermal treatment box according to any one of Claims 1 to 7, in which the mixing means (20) and the delivery means (29) are baffles capable of turning about different rotation axes (A'-A', A"-A").

11. Thermal treatment box according to any one of Claims 1 to 10, in which the mixing means (20) and the delivery means (29) are "drum" baffles.

12. Thermal treatment box according to any one of Claims 1 to 11, in which the mixing baffle (20) and the delivery baffle (29) have one and the same angle of clearance in rotation (α).

13. Thermal treatment box according to any one of Claims 1 to 11, in which the mixing baffle (20) and the delivery baffle (29) have different angles of clearance in rotation (α,α').
